# EUROPÄISCHE PATENTANMELDUNG

(11) **EP 1 050 455 A2**
(43) Veröffentlichungstag der Anmeldung: **08.11.2000**
(21) Anmeldenummer: 00108727.9
(22) Anmeldetag: 22.04.2000
(51) Int. Cl.: B63H 23/30

(54) **Schiffsantrieb mit lastschaltbarer Kupplungsanordnung**

(30) Priorität: 06.05.1999 DE 19920924
(71) Anmelder: RENK AKTIENGESELLSCHAFT, 86159 Augsburg (DE)
(72) Erfinder: Hultsch, Hartmut, 86343 Königsbrunn (DE)
(74) Vertreter: Schober, Stefan, Dipl.-Ing.

(57) **Zusammenfassung**

Die Erfindung betrifft einen Schiffsantrieb mit einer Überhol- oder Synchronkupplung (2), die zwischen einer Antriebswelle (1) und einem Getriebe (3, 15, 5, 14, 6, 12, 8) angeordnet ist, wobei zwischen der Antriebswelle (1) und dem Getriebe (3, 15, 5, 14, 6, 12, 8) eine in einem Antriebszweig (16, 17) angeordnete weitere Kupplung (7) in der Weise vorgesehen ist, daß für den Kuppelvorgang der Synchronkupplung (2) an dieser eine Drehzahldifferenz zwischen an- und abtreibender Seite erzeugbar ist, wodurch Ein- und Auskuppelvorgänge an der Überhol- oder Synchronkupplung (2) während des Betriebes ermöglicht werden.

## Beschreibung

Die Erfindung betrifft einen Schiffsantrieb gemäß dem Oberbegriff des Patentanspruchs 1 und Verfahren nach den Ansprüchen 10 und 11.

Es sind große Antriebsanlagen für Schiffe bekannt, z. B. Gasturbinenantriebe, die ohne Schaltkupplungen ausgeführt sind.

Weiterhin sind solche Antriebe auch allgenmein bekannt, die mit sogenannten Überhol- oder Synchronkupplungen ausgestattet sind. Solche Synchronkupplungen können in verschiedene Betriebszustände geschaltet werden.

In einer Normalstellung "kuppelbar" rückt sie automatisch ein, sobald die Antriebsmaschine hochläuft und die Antriebsseite der Kupplung schneller dreht als die Abtriebsseite. Die Synchronkupplung rückt automatisch aus, sobald die Abtriebsseite schneller dreht als ihre Antriebsseite, dies ist z. B. bei Anlagen mit mehreren Antriebsmaschinen möglich.

In einer weiteren Stellung, der sogenannten "AUS-Blockierung" (oder "locked-out") wird das automatische Einrücken der Kupplung verhindert, so daß die Antriebsmaschine bei weiterhin stillstehendem Abtrieb (z. B. Propeller, Waterjet, ...) hochgefahren werden kann. Dies ermöglicht z. B. einen Test- oder Waschbetrieb einer Gasturbine.

Bei laufender Antriebsmaschine und stillstehendem Abtrieb darf die Synchronkupplung nicht in den Betriebsmodus "kuppelbar" geschaltet werden, da in diesem Fall die Kupplung sofort einrücken würde und die Antriebsmaschine die Drehmassen der gesamten Anlage schlagartig beschleunigen würde. Dies würde zur Überlastung und Zerstörung der Synchronkupplung führen. Deshalb sind Synchronkupplungen mit einem Schutzmechanismus ausgestattet, der verhindert, daß die Kupplung einrückt wenn die Antriebsdrehzahl höher ist als die Abtriebsdrehzahl.

Dadurch muß eine Antriebsmaschine wie z. B. eine Gasturbine nach dem Hoch- und Vorlauten wieder abgeschaltet werden um den Abtrieb anzukuppeln und auch bei jedem Anhalten der Schiffsfahrt muß die Antriebsmaschine vollständig gestoppt werden. Dies wirkt besonders bei kurzen Schiffsstopps sehr ungünstig auf die Lebensdauer der Antriebsmaschinen wie z. B Gasturbinen.

Der Einsatz von lastschaltbaren Kupplungen (z. B. Lamellenkupplungen), die jederzeit ein- oder ausgekuppelt werden können, ist bei großen Antriebsanlagen nicht möglich, da ihre Drehzahl- oder Drehmomentgrenzen selbst bei speziellen Bauarten weit überschritten werden.

Es wurden schon große Bremsen an langsamer laufenden Getriebewellen eingesetzt, die über den Getriebezug die Abtriebswelle von Gasturbinen gegen den weiterlaufenden Gasgenerator der Turbine zum Stillstand bringen. Dies erfordert jedoch eine Bremse mit hoher Wärmeaufnahmekapazität und durch die hohe thermische Belastung in der Gasturbine ist diese Lösung auch nur für sehr kurze Schiffsstopps einsetzbar. Daß eine eingebaute Synchronkupplung dabei auskuppelt ist nicht sichergestellt.

Hiervon ausgehend ist es die Aufgabe der Erfindung einen Schiffsantrieb zu schaffen bei dem eine Überhol- oder Synchronkupplung auch im Betrieb schaltbar ist.

Diese Aufgabe wird mit den Merkmalen des Patentanspruchs 1 sowie den Verfahren nach den Ansprüchen 11 und 12 gelöst.

Die Erfindung erlaubt in vorteilhafter Weise das Schalten einer Überhol- oder Synchronkupplung während ihres Betriebes.

Dadurch ist es möglich Antriebsmaschinen wie z. B. Gasturbinen vor dem Ankuppeln von Abtrieben hochzufahren und zur Aufnahme der Fahrt von Schiffen bei weiterlaufender Maschine Abtriebe, beispielsweise Propeller oder Waterjets, anzukuppeln.

Besonders vorteilhaft ist dabei die Möglichkeit von Test- oder Waschbetrieben der Antriebsmaschinen, insbesondere von Gasturbinenanlagen, bei stillstehendem Abtrieb.

Ein weiterer Vorteil liegt in der Möglichkeit den Abtrieb bei weiterlaufender Maschine abkuppeln zu können, was sich insbesondere günstig auf die Lebensdauer von Gasturbinen auswirkt.

Durch die nachfolgend beschriebene Zeichnung wird die Erfindung näher erläutert.

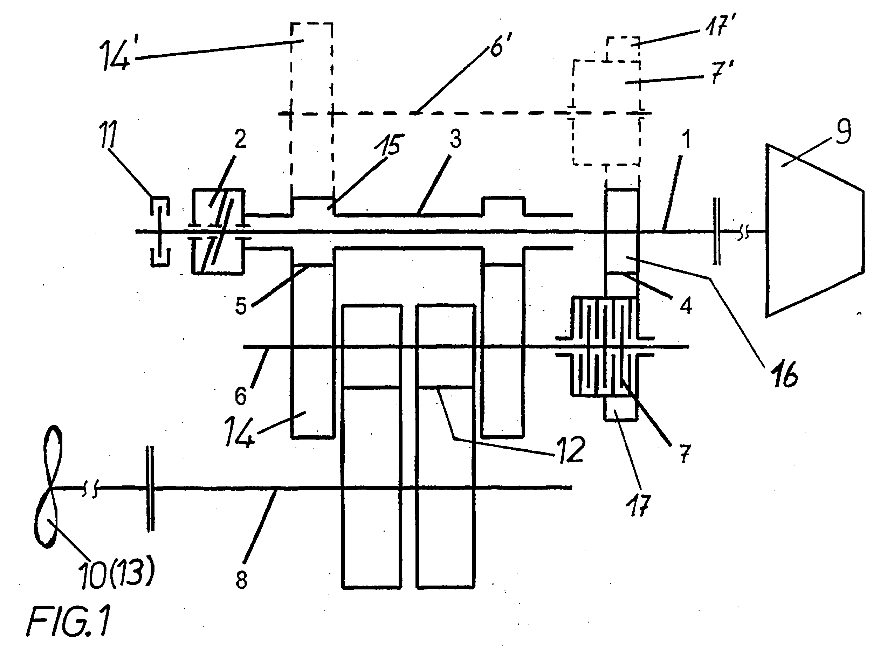

Die Figur 1 zeigt eine Schiffsantriebsanlage mit einer Antriebsmaschine (9), z. B. einer Gasturbine oder ein Dieselmotor, die in eine Antriebswelle (1) eintreibt. Die Antriebswelle ist frei drehbar in einer Hohlwelle (3) aufgenommen und ist vor ihrem Ende mit der Antriebsseite einer Überhol- oder Synchronkupplung (2) verbunden. An ihrem, von der Antriebsmaschine (9) abgewendeten, Ende ist eine Bremse (11) angeordnet mit der die Antriebswelle (1) gebremst werden kann. Diese Bremse (11) kann auch an anderer Position auf der Antriebswelle (1) montiert werden. Auf die Darstellung der Lagerungen und ihrer Anordnung wurde bei der Antriebswelle (1) wie auch bei allen anderen Wellen verzichtet, da diese in allgemein üblicher Weise ausgeführt sind.

Die Abtriebsseite der Überhol- oder Synchronkupplung (2) ist drehfest mit der Hohlwelle (3) verbunden, die ein oder mehrere Ritzel (15) trägt. Solch ein Ritzel (15) ist z. B. angefräst oder auf die Hohlwelle (3) aufgeschrumpft. In der Darstellung sind zwei solcher Ritzel (15) gezeigt, es ist jedoch - zur besseren Übersicht - nur eines mit einem Positionszeichen versehen, dies wird auch bei den weiteren Wellen so gehandhabt, wo es aus der Zeichnung klar hervorgeht, daß die Räder zusammenwirken.

Bei der Überhol- bzw. Synchronkupplung (2) handelt es sich vorzugsweise um eine handelsübliche Kupplung mit den nachfolgend beschriebenen Betriebsstellungen. In ihrer Normalstellung "kuppelbar" rückt die Kupplung sofort automatisch ein, wenn ihre Antriebsseite zu drehen beginnt bzw. wenn die Antriebsseite versucht schneller zu drehen als ihre Abtriebsseite. In einer weiteren Stellung, der sogenannten "AUS-Blockierung", wird das oben beschriebene automatische Einrücken der Kupplung verhindert, so daß die Antriebswelle (1) in Bewegung gesetzt werden kann, ohne den Abtrieb mitzudrehen. Da ein Einkuppeln der Synchronkupplung (2) bei laufender Antriebsmaschine und stillstehendem Abtrieb zur schlagartigen Beschleunigung der Drehmassen der gesamten Anlage führen würde und damit eine Zerstörung der Kupplung aufgrund von Überlastung zur Folge hätte, sind Ausführungen solcher Synchronkupplungen (2) mit einem Schutzmechanismus ausgestattet, der verhindert, daß in den Betriebsmodus "kuppelbar" geschaltet werden kann und die Kupplung dann automatisch einrückt wenn die Antriebsdrehzahl höher ist als die Abtriebsdrehzahl.

Von der Hohlwelle (3) wird über die Ritzel (15) und die Getriebestufe (5) mit Rädern (14) auf eine Zwischenwelle (6) getrieben. Von der Zwischenwelle (6) wird über eine weitere Getriebestufe (12) mit nicht näher gekennzeichneten Zahnrädern in die Abtriebswelle (8) eingetrieben. Die Abtriebswelle (8) ist vorzugsweise mit einem Propeller (10) oder einem Waterjet (13) verbunden über den der Antrieb des Schiffes erfolgt. Die Darstellung zeigt eine bevorzugte Ausführung der Getriebeanordnung bei der die Räder schrägverzahnt sind.

Andere Ausführungen mit weiteren Getriebestufen oder auch weniger Stufen, die z. B. auch leistungsteilende Zweige auf mehrere Abtriebswellen aufweisen, sind auch denkbar.

In einer weiteren Getriebestufe (4) kann von einem - auf der Antriebswelle (1) angeordneten - Zahnrad (16), das mit einem zahnrad (17) kämmt über eine lastschaltbare Kupplung (7) in die Zwischenwelle (6) des Getriebes eingetrieben werden. Bei laufender Antriebswelle (1), geschlossener Überhol- oder Synchronkupplung (2) und geöffneter Kupplung (7), die vorzugsweise als Lamellen- oder beispielsweise als Flüssigkeitskupplung ausgeführt ist, laufen beide Seiten der Kupplung (7) mit unterschiedlichen Drehzahlen. Die mit dem Zahnrad (17) verbundene Seite wird von der Antriebswelle (1) über die Getriebestufe (4) angetrieben und die mit der Zwischenwelle (6) verbundene Seite der Kupplung (7) wird ebenfalls von der Antriebswelle (1), jedoch über die Getriebestufe (5) angetrieben. Die Relativdrehzahl der beiden Kupplungsseiten ergibt sich aus dem Verhältnis der Über- bzw. Untersetzungsverhältnisse der beiden Getriebestufen (4) und (5).

Bei der dargestellten und bevorzugt ausgeführten Variante nutzt man die ohnehin vorhandene Zwischenwelle (6), um über die geschlossene Kupplung (7) und die Getriebestufen (4, 5) an der Hohlwelle (3), die mit der Abtriebsseite der Synchronkupplung (2) verbunden ist, eine Drehzahlerhöhung gegenüber der Antriebswelle (1) zu bewirken. Durch die Drehzahlerhöhung der Abtriebsseite der Synchronkupplung (2) gegenüber der Antriebswelle (1), die mit der Antriebsseite der Synchronkupplung (2) verbunden ist, kann die Überhol- oder Synchronkupplung ausgerückt werden.

Neben dieser Ausführung sind jedoch auch weitere denkbar, die eine solche Drehzahldifferenz an der Überhol- bzw. Synchronkupplung bewirken können, von denen eine beispielhaft mit Strichlinien in der Figur 1 dargestellt ist. Gezeigt wird ein Zahnrad (17'), das mit dem Zahnrad (16) kämmt und über eine Kupplung (7') in eine zusätzlich eingebaute Zwischenwelle (6') eintreibt. Mit einem auf ihr angeordneten Zahnrad (14') wird auf ein Ritzel (15) abgetrieben und so - durch entsprechende Übersetzungen an den Zahneingriffen - eine Drehzahldifferenz zwischen Antriebswelle (1) und der Abtriebsseite der Synchronkupplung (2) erreicht.

Um die Beanspruchung der lastschaltbare Kupplung (7) niedrig zu halten, sind Schaltvorgänge zum Ein- bzw. Ausrücken der Überhol- oder Synchronkuplung (2) nur im Leerlaufbetrieb der Antriebsmaschine (9) - bei niedriger Leistungsübertragung - vorgesehen.

Zum Einkuppeln der Überhol- oder Synchronkupplung (2) zum Schließen der Antriebsverbindung zwischen der bereits drehenden Antriebswelle (1) und der noch stehenden Hohlwelle (3) des Getriebes (3, 15, 5, 14, 6, 12, 8) steht die Überhol- oder Synchronkupplung (2) zunächst in dem Betriebsmodus, bei dem das Einkuppeln blockiert ist. Dann wird die Kupplung (7) geschlossen, wodurch das Getriebe (3, 15, 5, 14, 6, 12, 8) über die Getriebestufe (4) und die Zwischenwelle (6) in Betrieb gesetzt wird, so daß die mit dem Getriebe (3, 15, 5, 14, 6, 12, 8) über die Hohlwelle (3) fest verbundene Seite der Überhol- oder Synchronkupplung (2) schneller dreht als die mit der Antriebswelle (1) fest verbundene Seite der Überhol- oder Synchronkupplung (2). Nun wird die Überhol- oder Synchronkupplung (2) in den Betriebsmodus geschaltet, bei dem sie bei der Schaltdrehzahl automatisch einkuppelt und danach wird die Kupplung (7) geöffnet, wodurch die getriebeseitige bzw. abtriebsseitige Drehzahl der Überhol- oder Synchronkupplung (2) absinkt und die Überhol- oder Synchronkupplung (2) bei Erreichen der Schaltdrehzahl automatisch einkuppelt. Als Schaltdrehzahl wird die Drehzahl der Überhol- oder Synchronkupplung (2) bezeichnet, bei der ihre abtriebsseitige Drehzahl gerade unter die Drehzahl der Antriebsseite abfällt und sofort automatisch der Einkuppelvorgang abläuft.

Zum Auskuppeln der Überhol- oder Synchronkupplung (2) zum Öffnen der sich in Betrieb befindlichen Antriebsverbindung zwischen der Antriebswelle (1) und der Hohlwelle (3) des Getriebes (3, 15, 5, 14, 6, 12, 8) wird die Antriebsmaschine (9) zunächst auf Leerlaufdrehzahl gedrosselt. Dann wird die Kupplung (7) geschlossen, wodurch sich die getriebeseitige Drehzahl der Überhol- oder Synchronkupplung (2) gegenüber ihrer Antriebsseite erhöht und die Überhol- oder Synchronkupplung (2) dadurch automatisch die Verbindung öffnet.

Abschließend wird die Überhol- oder Synchronkupplung (2) in den Betriebsmodus geschaltet bei dem ihr Einkuppeln blockiert ist und danach wird die Kupplung (7) ebenfalls ausgekuppelt.

In dieser Stellung ist die Abtriebswelle (8) vollständig von der Antriebswelle (1) abgekoppelt.

In diesem Zustand kann die Antriebsmaschine (9) im Dauerleerlauf oder in einem Test- bzw. Waschbetrieb betrieben werden, ohne auf den Abtrieb einzuwirken.

### Bezugszeichenliste

- 1: Antriebswelle
- 2: Überhol- oder Synchronkupplung
- 3: Hohlwelle
- 4: Getriebestufe
- 5: Hauptstufe
- 6, 6': Zwischenwelle
- 7, 7': Kupplung
- 8: Abtriebswelle
- 9: Antriebsmaschine
- 10: Propeller
- 11: Bremse
- 12: Getriebestufe
- 13: Waterjet
- 14, 14': Zahnrad
- 15: Ritzel
- 16: Zahnrad
- 17, 17': Zahnrad

## Patentansprüche

1. Schiffsantrieb mit einer Überhol- oder Synchronkupplung (2), die zwischen einer Antriebswelle (1) und einem Getriebe (3, 15, 5, 14, 6, 12, 8) angeordnet ist, dadurch gekennzeichnet, daß zwischen der Antriebswelle (1) und dem Getriebe (3, 15, 5, 14, 6, 12, 8) eine in einem Antriebszweig (16, 17) angeordnete weitere Kupplung (7) in der Weise vorgesehen ist, daß für den Kuppelvorgang der Synchronkupplung (2) an dieser eine Drehzahldifferenz zwischen an- und abtreibender Seite erzeugbar ist.

2. Schiffsantrieb mit einer Überhol- oder Synchronkupplung (2) nach Anspruch 1, dadurch gekennzeichnet, daß die Getriebestufe (4) in Verbindung mit einer Hauptstufe (5) des Getriebes (3, 15, 5, 14, 6, 12, 8) die Drehzahl einer Hohlwelle (3) gegenüber der Antriebswelle (1) erhöht.

3. Schiffsantrieb mit einer Überhol- oder Synchronkupplung (2) nach Anspruch 1, dadurch gekennzeichnet, daß die Kupplung (7) eine lastschaltbare Kupplung ist.

4. Schiffsantrieb mit einer Überhol- oder Synchronkupplung (2) nach Anspruch 1, dadurch gekennzeichnet, daß die Kupplung (7) eine Lamellenkupplung oder eine Flüssigkeitskupplung ist.

5. Schiffsantrieb mit einer Überhol- oder Synchronkupplung (2) nach Anspruch 1, dadurch gekennzeichnet, daß die Überhol- oder Synchronkupplung (2) in einen Betriebsmodus schaltbar ist, bei dem das Einkuppeln blockiert ist.

6. Schiffsantrieb mit einer Überhol- oder Synchronkupplung (2) nach Anspruch 1, dadurch gekennzeichnet, daß an eine Abtriebswelle (8) ein Propeller (10) oder ein Waterjet (13) angekoppelt ist.

7. Schiffsantrieb mit einer Überhol- oder Synchronkupplung (2) nach Anspruch 1, dadurch gekennzeichnet, daß an der Antriebswelle (1) eine Bremse (11) vorgesehen ist.

8. Schiffsantrieb mit einer Überhol- oder Synchronkupplung (2) nach Anspruch 1, dadurch gekennzeichnet, daß an die Antriebswelle (1) eine Antriebsmaschine (9) angekoppelt ist.

9. Schiffsantrieb mit einer Überhol- oder Synchronkupplung (2) nach Anspruch 8, dadurch gekennzeichnet, daß die Antriebsmaschine (9) eine Gasturbine oder ein Dieselmotor ist.

10. Verfahren für das Einkuppeln einer Überhol- oder Synchronkupplung (2) zum Schließen einer Antriebsverbindung zwischen einer bereits drehenden Antriebswelle (1) und einer stehenden Welle eines Getriebes (3, 15, 5, 14, 6, 12, 8) insbesondere unter Verwendung der Vorrichtung nach Anspruch 1, wobei die Überhol- oder Synchronkupplung (2) zunächst in den Betriebsmodus geschaltet ist, bei dem das Einkuppeln blockiert ist und dann die Kupplung (7) geschlossen wird, wodurch das Getriebe (3, 15, 5, 14, 6, 12, 8) über die Getriebestufe (4) und die Zwischenwelle (6) in Betrieb gesetzt wird, so daß die mit dem Getriebe (3, 15, 5, 14, 6, 12, 8) fest verbundene Seite der Überhol- oder Synchronkupplung (2) schneller dreht als die mit der Antriebswelle (1) fest verbundene Seite der Überhol- oder Synchronkupplung (2) und nun die Überhol- oder Synchronkupplung (2) in den Betriebsmodus geschaltet wird, bei dem sie bei der Schaltdrehzahl automatisch einkuppelt, danach die Kupplung (7) geöffnet wird, wodurch die getriebeseitige Drehzahl der Überhol- oder Synchronkupplung (2) absinkt und die Überhol- oder Synchronkupplung (2) bei Erreichen der Schaltdrehzahl automatisch einkuppelt.

11. Verfahren für das Auskuppeln einer Überhol- oder Synchronkupplung (2) zum Öffnen einer sich in Betrieb befindlichen Antriebsverbindung zwischen einer Antriebswelle (1) und einer Hohlwelle (3) eines Getriebes (3, 5, 6, 12, 8) insbesondere unter Verwendung der Vorrichtung nach Anspruch 1, wobei die Antriebsmaschine (9) zunächst auf Leerlaufdrehzahl gedrosselt wird, dann die Kupplung (7) geschlossen wird, wodurch sich die getriebeseitige Drehzahl der Überhol- oder Synchronkupplung (2) gegenüber ihrer Antriebsseite erhöht und die Überhol- oder Synchronkupplung (2) dadurch automatisch die Verbindung öffnet und abschließend die Überhol- oder Synchronkupplung (2) in den Betriebsmodus geschaltet wird, bei dem das Einkuppeln blockiert ist und die Kupplung (7) dann ebenfalls ausgekuppelt wird.
